# EUROPÄISCHE PATENTSCHRIFT

(11) **EP 0 497 328 B1**
(45) Veröffentlichungstag und Bekanntmachung des Hinweises auf die Patenterteilung: **09.11.1994**
(21) Anmeldenummer: 92101490.8
(22) Anmeldetag: 29.01.1992
(51) Int. Cl.: B01D 53/04

(54) **Sorptionskolonne zur Abgasreinigung**
A sorption column for waste-gas cleaning
Colonne de sorption pour la purification de gaz d'échappement

(30) Priorität: 01.02.1991 DE 4102969
(43) Veröffentlichungstag der Anmeldung: 05.08.1992
(73) Patentinhaber: CS HALBLEITER-UND SOLARTECHNOLOGIE GMBH, D-80339 München (DE)
(72) Erfinder: Scholz, Christoph, Dr., W-8162 Schliersee (DE); Sefalidis, Vassilios, W-8000 München 21 (DE)
(74) Vertreter: Haft, von Puttkamer, Berngruber, Czybulka

(56) Entgegenhaltungen:
- EP-A- 0 347 407
- DE-A- 3 709 269
- DE-U- 8 801 502
- US-A- 4 266 952

## Beschreibung

Die Erfindung bezieht sich auf eine Sorptionskolonne zur Abgasreinigung.

Um Abgas von toxischen Gasen, z. B. Phosphin oder Arsin, oder genotoxischen Gasen, wie Tetrachlorkohlenstoff, zu reinigen, werden Sorptionskolonnen verwendet, die mit einem Sorbens gefüllt sind, um das betreffende toxische bzw. genotoxische Gas an der Oberfläche des Sorbens zu adsorbieren bzw. durch Umsetzung mit dem Sorbens zu absorbieren.

Wenn das Sorbens beladen ist, muß es zu einer Sondermüllbeseitigungsanlage transportiert werden. Dazu ist es erforderlich, das beladene Sorbens in einem Behälter zu transportieren, der nach den einschlägigen Vorschriften, wie der "Gefahrgut-Verordnung Straße (GGVS)" oder dem Internationalen ADR-Übereinkommen zum Transport von besonders überwachungspflichtigen Abfällen bzw. Gefahrstoffen zugelassen ist.

Dabei wird heutzutage i. a. so vorgegangen, daß die Flanschverbindungen am Gaseinlaß- und Gasauslaßstutzen der Kolonne gelöst und dann das beladene Sorbens in der Kolonne in solche zugelassene Transportbehälter umgefüllt wird, oder die Kolonne wird als Ganzes in einen zugelassenen Transportbehälter gegeben. Dabei besteht jedoch eine erhebliche Gefahr, daß nach dem Lösen der Flansche toxische Gase austreten, nicht zuletzt auch durch Eintritt von Luftfeuchtigkeit in die Kolonne, die zur Freisetzung toxischer Gase führen kann. Der Transport einer größeren Kolonne als Ganzes erfordert darüberhinaus große, sperrige Spezialbehälter, die einem aufwendigen Zulassungsverfahren unterworfen werden müssen.

Aus DE-Z: Umwelt, Band 19, 1989, Nr. 4, April, Seite 227, ist ein Absorber zur Abgasreinigung mit einem ein festes, stationäres Absorbens enthaltenden Faß bekannt, wobei das Faß mit einem Fußteil und mit einem Kopfteil verbunden ist. Der bekannte Absorber kann mobil betrieben und auf unterschiedliche Emissionsquellen ausgerichtet werden.

Aus DE-A-26 05 788 und DE-U-87 17 750.1 sind Absorptionskolonnen bekannt, die aus mehreren aufeinandergestapelten Gehäusesegmenten bestehen, die mit einem Sorbens beschickt sind. Zum Beschicken und Entleeren des Sorbens sind nach DE-U-87 17 750.1 seitlich an den Gehäusesegmenten Klappen vorgesehen und nach der DE-A-26 05 788 eine Einfüllöffnung an der Oberseite des obersten Gehäusesegments und eine Auslaßöffnung an der Unterseite des untersten Gehäusesegments. Ferner geht aus DE-U-89 03 669.7 ein mit einem Sorbens gefüllter Behälter mit eine Einfüllöffnung an der Oberseite und einer Auslaßöffnung an der Unterseite sowie einer seitlichen Zufuhr für das zu reinigende Gas hervor.

Aufgabe der Erfindung ist es, eine Sorptionskolonne zur Reinigung von Abgas von toxischen Gasen bereitzustellen, die, wenn das Sorbens beladen ist, gefahrlos und ohne großen Aufwand entsorgt werden kann.

Dies wird erfindungsgemäß mit der im Anspruch 1 gekennzeichneten Sorptionskolonne erreicht. In den Unteransprüchen sind vorteilhafte Ausgestaltungen der Erfindung wiedergegeben.

Bei der erfindungsgemäßen Sorptionskolonne ist das trockene Sorbens, das die toxischen Gase vorzugsweise absorbiert, also chemisch bindet, in Fässern enthalten, deren Ventile im Faßboden und Faßdeckel sich automatisch öffnen, wenn sie auf das Faßteil der Kolonne gestellt oder aufeinander gestapelt werden. Umgekehrt schließen sich die Ventile der Fässer automatisch, wenn sie voneinander getrennt werden bzw. das unterste Faß von dem Fußteil, also dem unteren Gasanschlußteil, das im allgemeinen das Gaszufuhrteil bildet, und das oberste Faß von dem Kopfteil, also dem oberen Gasanschlußteil, das im allgemeinen das Gasauslaßteil bildet, entfernt wird, um das Sorbens in der Kolonne zu entsorgen, wenn es beladen ist. Ein Eintritt von Luftfeuchtigkeit bzw. Austritt toxischer Gase ist damit beim Zerlegen, also Entsorgen der Kolonne ausgeschlossen.

Die Fässer sind absolut dicht, von der Größe her gut zu handhaben und können problemlos so ausgebildet werden, daß sie den einschlägigen Vorschriften zum Transport von Sondermüll bzw. Gefahrstoffen genügen.

Um stapelbar zu sein, weisen die Fässer vorzugsweise etwa den gleichen Durchmesser auf. Sie können jedoch in der Höhe unterschiedlich sein. Insbesondere, wenn ein Abgas mit einem Gemisch toxischer Gase gereinigt werden soll, können die einzelnen Fässer jeweils mit unterschiedlichen Sorbentien, die für die einzelnen Komponenten des toxischen Gasgemischs spezifisch sind, gefüllt sein.

Auch kann ein Faß leer sein oder lediglich einen Filter, beispielsweise in Form einer Filterpatrone, enthalten, um beispielsweise Staub oder Ölnebel an der Faßinnenwand bzw. im Filter abzuscheiden oder zu adsorbieren. Der Begriff "Sorbens" ist also erfindungsgemäß sehr weit auszulegen, betrifft also auch leere Fässer, die lediglich durch ihren Innenaufbau zur Adsorption befähigt sind, also nicht nur Fässer zur Trockenbett-Absorption. Neben einem oder mehreren Fässern mit Trockenbett-Absorbentien können auch ausheizbare Fässer oder Fässer mit Oxidationsmitteln oder dem Wärmeaustausch dienende Fässer in der nach dem Baukastenprinzip aufgebauten erfindungsgemäßen Sorptionskolonne vorgesehen sein. Durch den modularen Aufbau der erfindungsgemäßen Kolonne sind also vielfältige Variationsmöglichkeiten gegeben. Auch können Nach- und Umrüstungen bei Änderung der Prozeßbedingungen leicht bewerkstelligt werden.

Nachstehend ist die Erfindung anhand der Zeichnung näher erläutert. Darin zeigen jeweils schematisch:
- Fig. 1: einen Längsschnitt durch eine Ausführungsform der erfindungsgemäßen Sorptionskolonne;
- Fig. 2: den Ausschnitt A nach Fig. 1 in vergrößerter Wiedergabe;
- Fig. 3: einen Schnitt durch zwei zusammengesteckte geöffnete Ventile zweier aufeinandergestellter Fässer der Kolonne, und
- Fig. 4 und 5: einen Schnitt durch eine andere Ausführungsform des Kupplungsteils in der Schließ- bzw. Offenstellung.

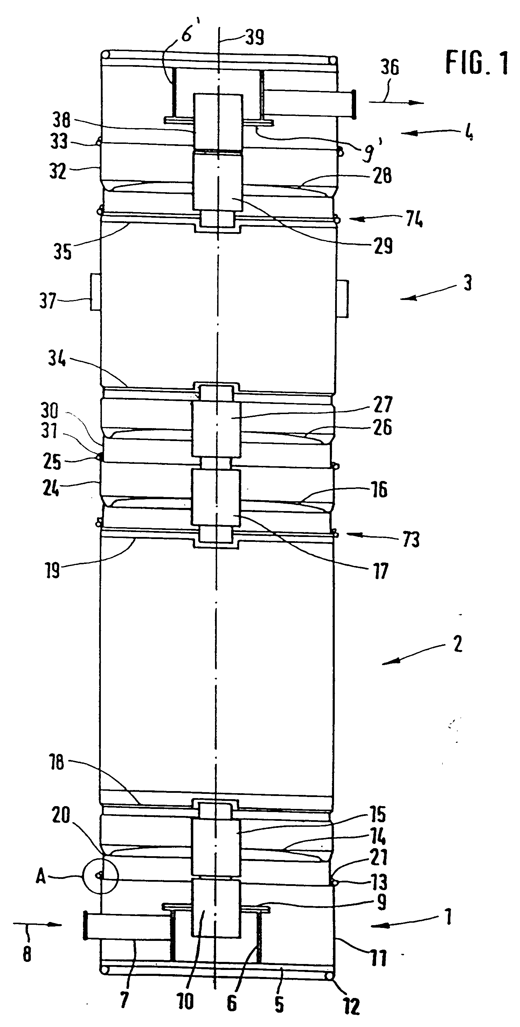

Gemäß Fig. 1 besteht die Sorptionskolonne aus einem unteren Gaseintrittsteil oder Fußteil 1, auf dem ein erstes Faß 2 abgestellt ist, sowie einem auf das erste Faß 2 gestellten zweiten Faß 3 und einem auf dem zweiten Faß 3 angeordneten oberen Gasauslaßteil oder Kopfteil 4. Das Fußteil 1, die Fässer 2 und 3 und das Kopfteil 4 sind zylindrisch, d. h. im Querschnitt kreisförmig, mit im wesentlichen gleichem Durchmesser ausgebildet.

Das Fußteil 1 weist einen Boden 5 auf, auf dem mittig eine zylindrische Kammer 6 angeordnet ist, in die über einen Rohrstutzen 7 gemäß dem Pfeil 8 das zu reinigende Abgas in die Sorptionskolonne strömt. Die Kammer 6 ist nach oben durch eine Platte 9 verschlossen, in der mittig ein Kupplungsstück 10 gasdicht angeordnet ist.

Die Umfangswand 11 des Fußteils 1 erstreckt sich nach unten über den Boden 5 hinaus unter Bildung eines reifenförmigen Standfußes mit einer nach innen gerichteten Bordur 12, auf der die Kolonne steht. Der obere Rand der Umfangswand 11 ist mit einer nach außen gerichteten Bordur 13 versehen.

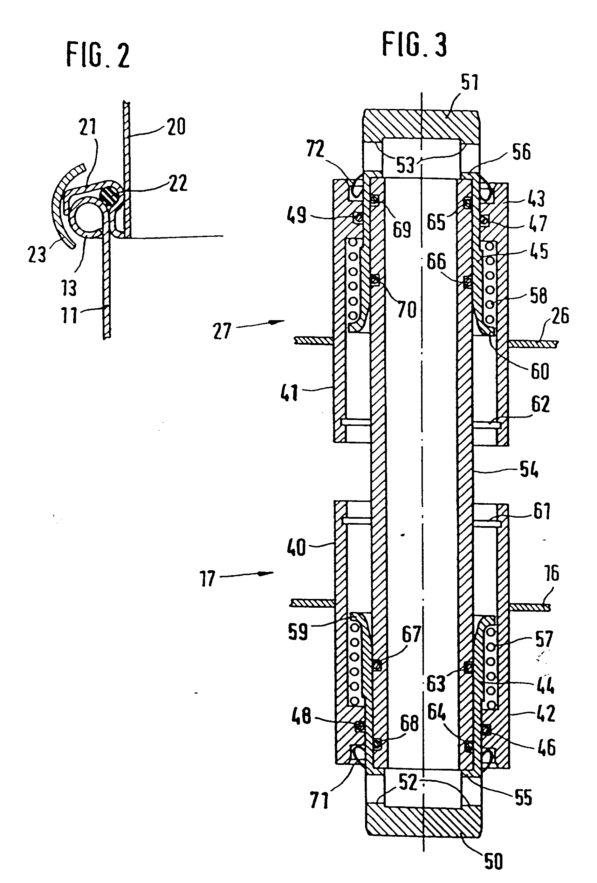

Das erste Faß 2 weist einen leicht nach oben gewölbten Boden 14 auf, in dem mittig ein Ventil 15 gasdicht angeordnet ist, z. B durch Einschweißen, ferner einen leicht nach oben gewölbten Deckel 16, in dem mittig ein Ventil 17 gasdicht angeordnet ist, das ebenfalls eingeschweißt sein kann. Oberhalb des Ventils 15 im Faßboden 14 und unterhalb des Ventils 17 im Faßdeckel 16 ist jeweils ein Lochblech, Sieb oder dgl. gasdurchlässige Wand 18 bzw. 19 vorgesehen. Zwischen den Lochblechen 18, 19 ist das in der Zeichnung nicht dargestellte trockene Absorbens angeordnet. Vom Faßboden 14 erstreckt sich nach unten über das Ventil 15 hinaus ein reifenförmiger Standfuß 20, der mit einer nach außen gerichteten Bordur 21 versehen ist, die die obere Bordur 13 des Fußteils 1 übergreift, was in Fig. 2 näher dargestellt ist.

Gemäß Fig. 2 ist zwischen den beiden zusammenwirkenden Borduren 13 und 21 ein Ring 22 aus Gummi oder einem anderen elastischen Material angeordnet. Um die aufeinandergesetzten Borduren 13 und 21 ist ein Spannring 23 gelegt, der die Borduren 13 und 21, wenn er gespannt ist, fest aneinanderdrückt und damit eine sichere Befestigung des Faßes 2 auf dem Fußteil 1 gewährleistet.

Über den Deckel 16 des Faßes 1 hinaus erstreckt sich ein reifenförmiger Ansatz 24 über das Ventil 17 hinaus. An seinem oberen Rand ist der Ansatz 24 des Faßes 2 mit einer Bordur 25 versehen, die der Bordur 13 am oberen Rand des Fußteils 1 entspricht. Der reifenförmige Ansatz 24 mit der Bordur 25 bildet einen zweiten Standfuß des Faßes 2, wenn dieses von der Kolonne entfernt und umgedreht wird.

Das zweite Faß 3 ist lediglich kürzer, ansonsten jedoch genauso aufgebaut wie das erste Faß 2. D. h., es weist in seinem Boden 26 ein Ventil 27 und in seinem Deckel 28 ein Ventil 29 auf. Der untere reifenförmige Ansatz 30 des Faßes 3 ist mit einer Bordur 31 versehen, und der obere reifenförmige Ansatz 32 mit einer Bordur 33, wobei die reifenförmigen Ansätze 30 und 32 und die Borduren 31 und 33 genauso ausgebildet sind wie die reifenförmigen Ansätze 20 und 24 bzw. Borduren 21 und 25 des Faßes 2. Gleiches gilt für die Lochbleche 34 und 35 im zweiten Faß 3. Auch werden die Fässer 2 und 3 in gleicher Weise mit einem Spannring miteinander verbunden, wie in Fig. 2 veranschaulicht.

Das Kopfteil 4 mit dem Kupplungsstück 38 entspricht ebenfalls in allen wesentlichen Einzelheiten dem Fußteil 1, abgesehen davon, daß es nach unten umgedreht ist, so daß es sich erübrigt, das Kopfteil 4 näher zu erläutern. Das gereinigte Abgas geht aus der Kolonne entsprechend dem Pfeil 36 vom Kopfteil 4 ab.

Zur weiteren Halterung der Kolonne dient ein Ring 37, der um das zweite, obere Faß 3 angeordnet und an einem Gestell oder dgl. fixiert ist. Wie aus Fig. 1 ersichtlich, fallen die Längsmittelachse des Fußteils 1, der Fässer 2 und 3 sowie des Kopfteils 4 mit der Längsmittelachse 39 der Sorptionskolonne zusammen.

Wie aus Fig. 1 ersichtlich, liegen die Kupplungsstücke 10 und 38 im Fußteil 1 bzw. Kopfteil 4 sowie die Ventile 15, 17, 27 und 29 alle koaxial zur Längsmittelachse 39 der Sorptionskolonne.

In Fig. 3 sind die beiden Ventile 17 und 27 im Faßdeckel 16 bzw. Faßboden 26 näher dargestellt, die die beiden Fässer 2 und 3 miteinander verbinden.

Danach weist jedes Ventil 17, 27 ein zylindrisches Ventilgehäuse 40, 41 auf, das in den Faßdeckel 16 bzw. Faßboden 26 eingeschweißt ist. Das Ventilgehäuse 40, 41 ist an seinem dem Inneren des zugehörigen Fasses 2 bzw. 3 zugewandten Ende mit einem Innenring 42, 43 versehen, an dem ein hülsenförmiger Ventilkörper 44, 45 verschieblich und gasdicht geführt ist. Dazu weist der Ring 42, 43 eine Nut 46, 47 an seiner Innenseite auf, in der ein Dichtungsring 48, 49 angeordnet ist. Der hülsenförmige Ventilkörper 44, 45 ist an seinem dem Inneren des zugehörigen Faßes 2 bzw. 3 zugewandten Ende durch einen Boden 50, 51 verschlossen, jedoch vor dem Boden 50, 51 an seiner Umfangswand mit Gasdurchtrittsbohrungen 52, 53 versehen.

Ein Rohr 54, das jeweils in das von dem zugehörigen Faß 2 bzw. 3 abgewandte offene Ende der hülsenförmigen Ventilkörper 44, 45 gesteckt ist, verbindet die Ventilkörper 44, 45 miteinander, und stützt sich an einem Innenring 55, 56 am Ventilkörper 44, 45 ab, der auf der von dem Boden 50, 51 abgewandten Seite der Gasdurchtrittsbohrungen 52, 53 angeordnet ist.

In Fig. 3 sind die Ventile 17 und 27 in der geöffneten Stellung gezeigt. D. h., die Ventilkörper 44, 45 sind durch das Rohr 54 so in das zugehörige Faß 2 bzw. 3 hineingeschoben, daß das Innere des jeweiligen Faßes 2 bzw. 3 über die Gasdurchtrittsbohrungen 52, 53 mit dem Inneren des Rohres 54 kommuniziert. D. h., die Innenräume der Fässer 2 und 3 kommunizieren über die Ventile 17 und 27 und das Rohr 54 miteinander.

Die Ventile 17 und 27 sind jedoch in ihre Schließstellung federbelastet. Dazu ist eine als Druckfeder 57, 58 ausgebildete Ventilfeder vorgesehen, die sich einerseits an den Innenring 42, 43 am Ventilgehäuse 40, 41 und andererseits an einem Außenringflansch 59, 60 an dem vom jeweiligen Faß 2 bzw. 3 abgewandten Ende des Ventilkörpers 44, 45 abstützt. Wenn sich die Ventilkörper 44, 45 in die Schließstellung bewegen, bewegt sich der Boden 50, 51 an dem jeweiligen Faß 2 bzw. 3 zugewandten Ende der Ventilkörper 44, 45 in Höhe der Innenringe 42, 43 am Ventilgehäuse 40, 41, wodurch die Gasdurchtrittsbohrungen 52, 53 geschlossen werden. Diese Stellung tritt also automatisch ein, wenn die Fässer 2, 3 und damit die Ventile 17 und 27 voneinander entfernt werden. Damit die Ventilkörper 44, 45 in der Schließstellung der Ventile 17, 27 fixiert sind, sind ringförmige Anschläge 61, 62 an der Innenseite des Ventilgehäuses 40, 41 vorgesehen, an denen die Außenringflansche 59, 60 in Schließstellung zur Anlage kommen.

Um das Rohr 54 gegenüber den Ventilkörpern 44, 45 abzudichten, sind an beiden Enden des Rohres 54 Nuten 63 bis 66 vorgesehen, in denen Dichtringe 67 bis 70 vorgesehen sind. Die Dichtringe 67 und 70 sind so angeordnet, daß sie mit dem zu reinigenden Abgas nicht in Kontakt kommen.

Wenn die Fässer 2, 3 unter Bildung der Sorptionskolonne aufeinandergestapelt sind, sind die Ventile 17 und 27 geöffnet, wie in Fig. 3 dargestellt, d. h. die Ventilkörper 44, 45 ragen mit den Gasdurchtrittsbohrungen 52, 53 in das betreffende Faß 2 bzw. 3 hinein. Dadurch können sich im Bereich der Durchtrittsbohrungen 52, 53 an der Außenseite des Ventilkörpers 44, 45 Feststoffe absetzen, die das Verschieben des Ventilkörpers 44, 45 in das Ventilgehäuse 40, 41 hinein und damit das Schließen des Ventils 17 bzw. 27 beeinträchtigen oder gar verhindern können. Um dies auszuschließen, sind an dem dem jeweiligen Faß 2 bzw. 3 zugewandten Ende des Ventilgehäuses 40, 41 Abstreifringe 71 bzw. 72 vorgesehen.

Das Ventil 15 in dem Boden des Faßes 2 ist genauso ausgebildet wie das Ventil 27 in dem Boden des Faßes 3, und das Ventil 29 im Deckel des Faßes 3 genauso wie das Ventil 17 im Deckel des Faßes 2. Das Kupplungsstück 10 im Fußteil 1 und das Kupplungsstück 38 im Kopfteil 4 kann jedoch lediglich aus einem Rohr bestehen, das dem Rohr 54 entspricht. Die Kupplungsstücke 10 und 38 im Fußteil 1 bzw. Kopfteil 4 können jedoch auch als verschließbare Ventile entsprechend den Ventilen 17 und 27 gemäß Fig. 3 ausgebildet sein.

Wenn das Sorbens in den Fässern 2 und 3 beladen ist, werden die Spannringe 23 zwischen den Fässern 2 und 3 sowie zwischen dem Fußteil 1 und dem Faß 2 und dem Kopfteil 4 und dem Faß 3 gelöst, so daß die Fässer 2 und 3 von der Kolonne genommen werden können. Dabei schließen sich die Ventile 15, 17, 27 und 29 automatisch. Die Rohre 54 können nun entfernt und die absolut dicht verschlossenen Fässer 2 und 3 problemlos abtransprotiert werden, um das darin enthaltene beladene Sorptionsmittel zu entsorgen.

Zum Füllen und Entleeren der Fässer 2, 3 sind die Deckel 16, 28 abnehmbar ausgebildet, beispielsweise durch Spannring-Verschlüsse, die der in Fig. 2 dargestellten Spannring-Verbindung entsprechen, wobei eine derartige Verbindung zwischen dem Deckel 16, 28 und dem darunter liegenden Lochblech 19, 35 in der Umfangswand des Fasses 2 bzw. 3 vorgesehen sein kann, wie durch die Bezugsziffern 73 und 74 in Fig. 1 angedeutet.

Wie erwähnt, kann das Kupplungsstück des oberen Gasanschluß- oder Kopfteils 4 entsprechend dem Ventil 27 gemäß Fig. 3 ausgebildet sein, wobei dann die Platte 9' der Kammer 6' in Fig. 1 den Faßboden 26 gemäß Fig. 3 ersetzt. Es ist jedoch ersichtlich, daß bei dieser Ausführungsform z. B. das im Rohr 54 enthaltene Gas beim Entkuppeln entweichen kann.

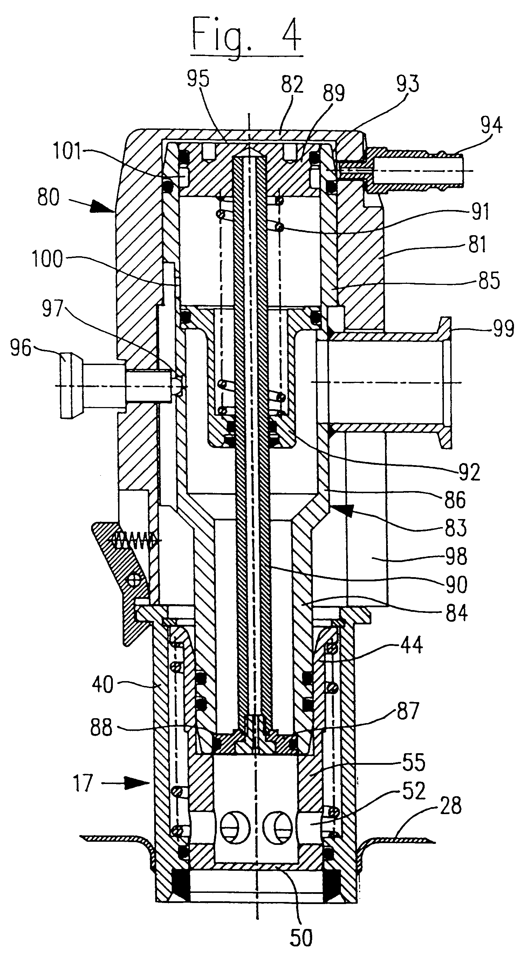

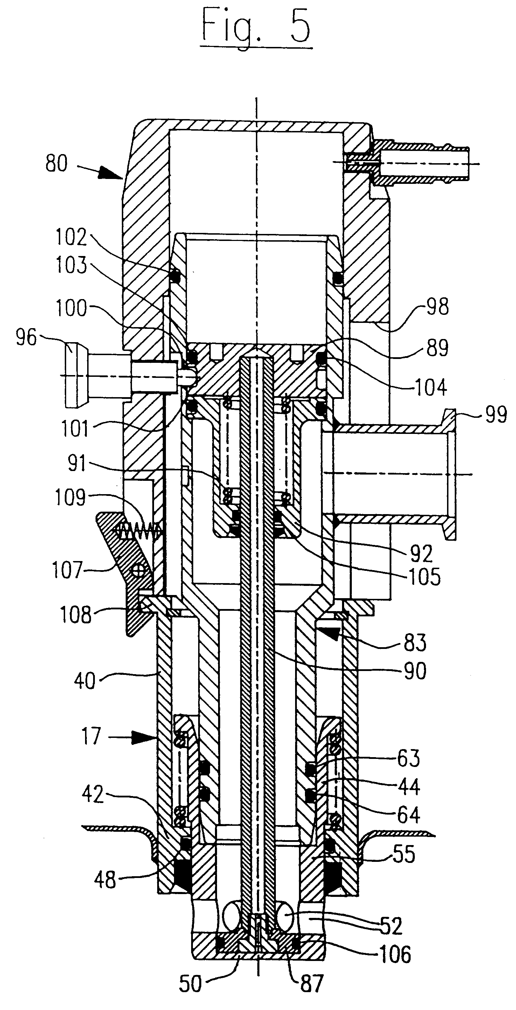

In Fig. 4 und 5 ist eine andere Ausführungsform eines Kupplungsstücks 80 dargestellt, das das obere Gasanschluß- oder Kopfteil bildet. Das Ventil, mit dem das Gasauslaßteil verbunden ist, entspricht dem Ventil 17 in Fig. 3, so daß auf dieses Ventil nicht näher eingegangen zu werden braucht. Das Ventil 17 befindet sich in Fig. 4 und 5 freilich im Deckel 28 des oberen Fasses 3.

Das Kupplungsteil 80 gemäß Fig. 4 und 5 weist ein zylindrisches Gehäuse 81 auf, das auf der vom Ventil 17 abgewandten Seite durch die Stirnwand 82 geschlossen ist. In dem Gehäuse 81 ist ein hülsenförmiger Körper 83 verschieblich geführt. Der hülsenförmige Körper 83 besteht aus einem unteren, in das Ventil 17 eingreifenden Abschnitt 84 geringeren Durchmessers, der dem Rohr 54 nach Fig. 3 entspricht, einem oberen Abschnitt 85, der gasdicht an der Innenwand des Gehäuses 81 anliegt und einem mittleren Abschnitt 86 zwischen dem unteren Abschnitt 84 und dem oberen Abschnitt 85. Der untere Abschnitt 84 stützt sich wie das Rohr 54 nach Fig. 3 an dem Innenring 55 des Ventilkörpers 44 des Ventils 17 ab.

Der hülsenförmige Körper 83 bildet zugleich das Ventilgehäuse für ein in das Gehäuse 81 des Kupplungsstücks 80 integriertes Ventil. Der Ventilteller 87 dieses Ventils ist scheibenförmig ausgebildet und liegt in der in Fig. 4 dargestellten Schließstellung an einer Ringschulter 88 an, die den Ventilsitz bildet und durch einen erweiterten Innendurchmesser an der dem Innenring 55 des Ventilkörpers 44 des Ventils 17 zugewandten Seite des unteren Abschnitts 84 des hülsenförmigen Körpers 83 gebildet wird.

Der Ventilteller 87 ist in dem Innenring 55 verschieblich und gasdicht geführt. In seiner Offenstellung gemäß Fig. 5 ist der Ventilteller 87 unter Freigabe der Öffnungen 52 am Boden 50 des Ventilkörpers 44 angeordnet.

Der Ventilteller 87 wird durch einen im oberen Abschnitt 85 des hülsenförmigen Körpers 83 verschiebbar geführten Kolben 89 betätigt, mit dem er über eine Kolbenstange 90 verbunden ist. Mit einer Druckfeder 91 wird der Ventilteller 87 gegen den Ventilsitz 88 belastet. Die Feder 91 erstreckt sich um die Kolbenstange 90 und stützt sich einerseits am Kolben 89 und andererseits an einem topfförmigen Federgehäuse 92 im mittleren Abschnitt 86 des hülsenförmigen Körpers 83 ab, in der die Kolbenstange 90 gasdicht verschieblich geführt ist.

Durch eine Verjüngung 93 der Außenseite des oberen Abschnitts 85 des hülsenförmigen Körpers 83 an der der Stirnwand 82 des Gehäuses 81 zugewandten Seite ist in Schließstellung des Kupplungsstücks 80 gemäß Fig. 4 eine Verbindung von einem Druckluftanschluß 94 am oberen Endabschnitt des Gehäuses 81 zu einem spaltförmigen Druckraum 95 zwischen dem Kolben 89 und der Stirnwand 82 geschaffen. Durch einen Rastbolzen 96, der in dem Gehäuse 81 befestigt ist und in eine Ausnehmung 97 an dem mittleren Abschnitt 86 des hülsenförmigen Körpers 83 in Schließstellung gemäß Fig. 4 eingreift, kann der Körper 83 in Geschlossenstellung gemäß Fig. 4 gegen Verschiebung gesichert werden.

Durch einen Längsschlitz 98 des Gehäuses 81 erstreckt sich ein Gaseinlaßstutzen 99, der in das Innere des hülsenförmigen Körpers 83 im Bereich des mittleren Abschnitts 86 mündet. Der hülsenförmige Körper 83 weist eine Bohrung 100 auf, die in Schließstellung gemäß Fig. 4 oberhalb der Zwischenwand des Federgehäuses 92 verläuft. Der Kolben 89 ist mit einer ringnutförmigen Ausnehmung 101 versehen. Mit den Bezugszeichen 102 bis 106 sind Dichtungsringe bezeichnet.

Zur Verbindung des Kupplungsstücks 80 mit dem Ventil 17 sind am Gehäuse 81 unter Bildung von Schnappern mehrere Haken verschwenkbar befestigt, wobei in Fig. 4 und 5 nur der Haken 107 zu sehen ist. Der Haken 107 übergreift einen sich nach außen erstreckenden Ringflansch 108 am Ventilgehäuse 40 des Ventils 17 und ist durch eine Feder 109 in Verriegelungsstellung belastet.

Wenn der in Fig. 4 dargestellte Druckraum 95 mit über dem Anschluß 94 zugeführter Druckluft beaufschlagt wird, bewegt sich der Kolben 89 bis zum Anschlag an die Zwischenwand 92 nach unten und der Ventilkörper 87 vom Ventilsitz 88 zum Boden 50 des Ventilkörpers 44.

Im weiteren Verlauf nimmt der gegen die Zwischenwand des Federgehäuses 92 drückende Kolben 89 den hülsenförmigen Körper 83 nach unten mit, wodurch dieser durch seine Anlage an dem Innenring 55 den Ventilkörper 44 in die in Fig. 5 dargestellte Offenstellung nach unten bewegt. Diese Stellung wird durch einen Rastbolzen 96 arretiert, der von außen durch die Bohrung 100 im hülsenförmigen Körper 83 in die Ausnehmung 101 einrastet. Alsdann kann die Druckluft abgeschaltet werden. Bei der Ausführungsform des Kupplungsstücks 80 nach Fig. 4 und 5 kann praktisch kein toxisches Abgas mehr ins Freie bzw. Umgebungsluft in die Kolonne gelangen. Das untere Gasanschlußteil kann in gleicher Weise ausgebildet sein.

Das in Fig. 4 und 5 dargestellte Kupplungsstück 80 ist auch für andere Zwecke verwendbar, z. B. auch zum Evakuieren von Behältern, die mit einem Ventil gemäß dem Ventil 17 verschließbar sind.

## Patentansprüche

1. Sorptionskolonne zur Abgasreinigung, mit einem oder mehreren aufeinandergestapelten, ein festes, stationäres Sorbens enthaltenden Fässern (2, 3), von denen jedes ein Ventil (17, 29) im Faßdeckel (16, 28) und ein Ventil (15, 27) im Faßboden (14, 26) aufweist, mit einem unteren Gasanschlußteil (1), auf welches das Faß (2) oder der Fässerstapel stellbar ist, und einem oberen Gasanschlußteil (4), welche beiden Gasanschlußteile (1, 4) jeweils ein Kupplungsstück (10, 38; 80) aufweisen, wobei das Kupplungsstück (10; 80) des unteren Gasanschlußteils (1) mit dem Ventil (15) im Boden (14) des untersten Fasses (1) und das Kupplungsstück (38; 80) des oberen Gasanschlußteils (4) mit dem Ventil (29) im Deckel (28) des obersten Fasses (3) Zusammensteckbar ausgebildet sind und, sofern die Sorptionskolonne mehr als ein Faß umfaßt, jeweils das Ventil (17) im Faßdeckel (16) mit dem Ventil (27) im Faßboden (26) des darauf gestapelten Fasses (3) Zusammensteckbar ausgebildet ist, und wobei sich alle Ventile (15, 17, 27, 29) beim Zusammenstecken mit den Kupplungsstücken (10, 38; 80) oder miteinander unter Bildung eines vom unteren Gasanschlußteil (1) zum oberen Gasanschlußteil (4) kommunizierenden Gasraums öffnen.

2. Sorptionskolonne nach Anspruch 1, dadurch gekennzeichnet, daß das Kupplungsstück (10) im unteren Gasanschlußteil (1), die Ventile (15, 17, 27, 29) in dem Faß bzw. den Fässern (2, 3) und das Kupplungsstück (38, 80) im oberen Gasanschlußteil (4) koaxial zur Längsmittelachse (39) der Sorptionskolonne angeordnet sind.

3. Sorptionskolonne nach einem der vorstehenden Ansprüche, dadurch gekennzeichnet, daß jedes Faß (2, 3) an seinem unteren Rand und seinem oberen Rand jeweils eine Bordur (21, 31 bzw. 25, 33) aufweist, wobei die Bordur (21, 31) an dem unteren Rand die Bordur (25, 33) an dem benachbarten oberen Rand (13, 25, 33) jeweils übergreift.

4. Sorptionskolonne nach einem der vorstehenden Ansprüche, dadurch gekennzeichnet, daß die Ventile (15, 27 bzw. 17, 29) im Boden (14, 26) und Deckel (16, 28) jedes Fasses (2, 3) ein in den Faßboden (14, 26) bzw. Faßdeckel (16, 28) gasdicht eingesetztes Ventilgehäuse (40, 41) aufweisen, in dem ein hülsenförmiger Ventilkörper (44, 45) in Faßlängsrichtung verschieblich geführt ist, der in der Schließstellung von dem Inneren des zugehörigen Fasses (2, 3) weg federbelastet, an seinem dem Inneren des zugehörigen Fasses (2, 3) zugewandten Ende verschlossen und mit wenigstens einer Gasdurchtrittsöffnung (52, 53) an seinem Umfang versehen ist, wobei die Gasdurchtrittsöffnung (52, 53) in der Schließstellung durch das Ventilgehäuse (40, 41) verschlossen ist, und wobei bei aufeinandergestapelten Fässern (2, 3) vorgesehen ist, daß ein Rohr (54) in die einander zugewandten offenen Enden der Ventilkörper (44, 45) der beiden Fässer ragt und sich an den Ventilkörpern (44, 45) abstützt, um die Ventilkörper (44, 45) in die Offenstellung zu drücken.

5. Sorptionskolonne nach Anspruch 4, dadurch gekennzeichnet, daß das Ventilgehäuse (40, 41) einen Innenring (42, 43) aufweist, der die Gasdurchtrittsöffnung (52, 53) in der Schließstellung verschließt.

6. Sorptionskolonne nach Anspruch 4 oder 5, dadurch gekennzeichnet, daß in dem Ventilkörper (44, 45) ein Innenring (55, 56) vorgesehen ist, an dem sich das Rohr (54) mit seinen Enden abstützt.

7. Sorptionskolonne nach einem der Ansprüche 4 bis 6, dadurch gekennzeichnet, daß die Feder, die den Ventilkörper (44, 45) in die Schließstellung belastet, eine sich einerseits an dem Innenring des Ventilgehäuses (42, 43) und andererseits an einem Außenring (59, 60) des Ventilkörpers (44, 45) abstützende Druckfeder (57, 58) ist.

8. Sorptionskolonne nach einem der Ansprüche 4 bis 7, dadurch gekennzeichnet, daß zwischen dem Ventilkörper (44, 45) und dem Ventilgehäuse (40, 41) im Innenring (42, 43) des Ventilgehäuses (40, 41) eine Dichtung (48, 49) angeordnet ist..

9. Sorptionskolonne nach einem der Ansprüche 4 bis 8, dadurch gekennzeichnet, daß zwischen dem Rohr (54) und dem Ventilkörper (44, 45) am Rohrumfang eine Dichtung (63 bis 66) angeordnet ist.

10. Sorptionskolonne nach einem der Ansprüche 4 bis 9, dadurch gekennzeichnet, daß an dem dem zugehörigen Faß zugewandten Ende des Ventilgehäuses (40,41) ein Abstreifring (71, 72) angeordnet ist, der am Außenumfang des Ventilkörpers (44, 45) angreift.

11. Sorptionskolonne nach einem der vorstehenden Ansprüche, dadurch gekennzeichnet, daß das obere und/oder untere Gasanschlußteil durch ein Kupplungsteil (80) gebildet wird, das ein Gehäuse (81) aufweist, in dem ein hülsenförmiger Körper (83) verschiebbar geführt ist, dessen eines Ende in das offene Ende des Ventilkörpers (44) des Ventils (17) im Deckel (28) des Fasses bzw. obersten Fasses (3) bzw. im Boden (14) des Fasses bzw. untersten Fasses (2) ragt und durch einen Ventilkörper (87) verschließbar ist, der in der Offenstellung des Ventils (17) im Deckel (28) bzw. Boden (14) unter Freigabe der wenigstens einen Öffnung (52) im Ventilkörper (44) am Boden (50) des Ventilkörpers (44) des Ventils (17) im Deckel (28) bzw. Boden (14) anliegt, wobei das andere Ende des hülsenförmigen Körpers (83) durch eine Wand (92) verschlossen ist, wobei ein Gasstutzen (99) in das Innere des hülsenförmigen Körpers (83) zwischen dessen einem Ende und der Wand (92) mündet.

12. Sorptionskolonne nach Anspruch 11, dadurch gekennzeichnet, daß zur Betätigung des Ventilkörpers (87) im Kupplungsteil (80) ein mit einem Druckmittel beaufschlagbarer Kolben (89) vorgesehen ist, der im hülsenförmigen Körper (83) an der vom Ventilkörper (87) abgewandten Seite der Wand (92) verschiebbar angeordnet ist, wobei der Kolben (89) durch eine die Wand (92) gaasdicht durchsetzende Kolbenstange (90) mit dem Ventilkörper (87) verbunden ist.

13. Sorptionskolonne nach Anspruch 12, dadurch gekennzeichnet daß der hülsenförmige Körper (83) und der Kolben (89) in der Offenstellung des Ventils (17) im Deckel (28) bzw. Boden (14) des Fasses (3, 2) arretierbar ausgebildet sind.

## Claims

1. A sorption column for waste-gas cleaning having one vat or a plurality of stacked vats (2, 3) containing a solid, stationary sorbent, each vat having a valve (17, 29) in the vat cover (16, 28) and a valve (15, 27) in the vat bottom (14, 26), having a lower gas connecting piece (1), upon which the vat (2) or the stack of vats can be placed, and an upper gas connecting piece (4), both gas connecting pieces (1, 4) having a coupling member (10, 38; 80), the coupling member (10; 80) of the lower gas connecting piece (1) being adapted to be joined with the valve (15) in the bottom (14) of the lower vat (1) and the coupling member (38; 80) of the upper gas connecting piece (4) being adapted to be joined with the valve (29) in the cover (28) of the upper vat (3), and in case the sorption column comprises more than one vat the valve (17) in the vat cover (16) being adapted to be joined with the valve (27) in the vat bottom (26) of the vat (3) stacked thereon, and all valves (15, 17, 27, 29) being open, when joined with the coupling members (10, 38; 80) or with each other so as to form a gas space communicating from the lower gas connecting piece (1) to the upper gas connecting piece (4).

2. The sorption column of claim 1, characterized in that the coupling member (10) in the lower gas connecting piece (1), the valves (15, 17, 27, 29) in the vat or vats (2, 3) and the coupling member (38, 80) in the upper gas connecting piece (4) are disposed coaxially with the longitudinal center axis (39) of the sorption column.

3. The sorption column of any of the above claims, characterized in that each vat (2, 3) has a border (21, 31 or 25, 33) on its lower edge and its upper edge, whereby the border (21, 31) on the lower edge engages over the border (25, 33) on the adjacent upper edge (13, 25, 33).

4. The sorption column of any of the above claims, characterized in that the valves (15, 27 or 17, 29) in the bottom (14, 26) and cover (16, 28) of each vat (2, 3) have a valve box (40, 41) inserted gastight in the vat bottom (14, 26) or vat cover (16, 28), in which a sleeve-shaped valve gate (44, 45) is guided displaceably in the logitudinal direction of the vat, being spring-loaded in the closed position away from the interior of the corresponding vat (2, 3), closed at its end facing the interior of the corresponding vat (2, 3), and provided on its circumference with at least one gas passage opening (52, 53) the gas passage opening (52, 53) being closed by the valve box (40, 41) in the closed position and whereby a pipe (54) is provided which protrudes into the open ends of the valve gate (44, 45) of both vats facing each other and is supported on the valve gates (44, 45) in order to urge the valve gates (44, 45) into the open position when the vats (2, 3) are stacked.

5. The sorption column of claim 4, characterized in that the valve box (40, 41) has an inner ring (42, 43) which closes the gas opening (52, 53) in the closed position.

6. The sorption column of claim 4 or 5, characterized in that an inner ring (55, 56) is provided in the valve gate (44, 45) on which the pipe (54) is supported with its ends.

7. The sorption column of any of claims 4 to 6, characterized in that the spring which loads the valve gate (44, 45) in the closed position is a compression spring (57, 58) supported on the inner ring of the valve box (42, 43), on the one hand, and on an outer ring (59, 60) of the valve gate (44, 45), on the other hand.

8. The sorption column of any of claims 4 to 7, characterized in that between the valve gates (44, 45) and the valve box (40, 41) a seal (48, 49) is disposed in the inner ring (42, 43) of the valve box (40, 41).

9. The sorption column of any of claims 4 to 8, characterized in that between the pipe (54) and the valve gate (44, 45) a seal (63 to 66) is disposed on the pipe circumference.

10. The sorption column of any of claims 4 to 9, characterized in that a scraper ring (71, 72) is disposed on the end of the valve box (40, 41) facing the corresponding vat which engages the outer circumference of the valve gate (44, 45).

11. The sorption column of any of the above claims, characterized in that the upper and/or lower gas connnecting piece is formed by a coupling member (80) having a housing (81) in which a sleeve-shaped body (83) is displaceably guided whose one end protrudes into the open end of the valve gate (44) of the valve (17) in the cover (28) of the vat or uppermost vat (3) or in the bottom (14) of the vat or lowermost vat (2) and is adapted to be closed by a valve gate (87) which, in the open position of the valve (17) in the cover (28) or bottom (14) engages the bottom (50) of the valve gate (44) of the valve (17) in the cover (28) or the bottom (14), thereby unblocking the at least one opening (52) in the valve gate (44), the other end of the sleeve-shaped body (83) being closed by a wall (92), and a gas connecting piece (99) opens into the interior of the sleeve-shaped body (83) between its one end and the wall (92).

12. The sorption column of claim 11, characterized in that for operating the valve gate (87) a pressurized piston (89) is provided in the coupling member (80), being displaceably disposed in the sleeve-shaped body (83) on the side of the wall (92) facing away from the valve gate (87), the piston (89) being connected with the valve gate (87) by a piston rod (90) penetrating the wall (92) in gastight fashion.

13. The sorption column of claim 12, characterized in that the sleeve-shaped body (83) and the piston (89) are adapted to be locked in the open position of the valve (17) in the cover (28) or bottom (14) of the vat (3, 2).

## Revendications

1. Colonne à sorption pour épurer des gaz d'échappement, comportant un ou plusieurs récipients (2, 3), empilés les uns sur les autres, contenant un agent de sorption solide, stationnaire, dont chacun présente une soupape (17, 29) montée dans le couvercle de récipient (16, 28) et une soupape (15, 27) montée dans le fond du récipient (14, 26), une partie de raccordement de gaz (1) inférieure sur laquelle le récipient (2) ou la pile de récipients peut être mis en place, et une partie de raccordement de gaz (4) supérieure, ces deux parties de raccordement de gaz (1, 4) présentant respectivement une pièce d'accouplement (10, 38; 80), la pièce d'accouplement (10, 80) de la partie de raccordement de gaz inférieure (1) étant réalisée pour pouvoir être enfichée avec la soupape (15) dans le fond du récipient (1) situé le plus bas, et la pièce d'accouplement (38, 80) de la partie de raccordement de gaz supérieure (4) étant réalisée pour pouvoir être enfichée avec la soupape (29) dans le couvercle (28) du récipient (3) situé le plus haut, et, dans la mesure où la colonne à sorption comprend plus d'un récipient, chaque soupape (17) montée dans le couvercle d'un récipient (16) étant réalisée enfichable avec la soupape (27) montée dans le fond (26) du récipient (3) empilé dessus, et toutes les soupapes (15, 17, 27, 29) s'ouvrant, lors de l'enfichage avec les pièces d'accouplement (10, 38; 80) ou de l'enfichage les unes dans les autres, en formant une enceinte à gaz, communiquant depuis la partie de raccordement de gaz (1) inférieure jusqu'à la partie de raccordement de gaz (4) supérieure

2. Colonne à sorption selon la revendication 1, caractérisée en ce que la pièce d'accouplement (10) située dans la partie de raccordement de gaz (1) inférieure, les soupapes (15, 17, 27, 29) se trouvant dans le ou dans les récipients (2, 3), et la pièce d'accouplement (38, 80) située dans la partie de raccordement de gaz (4) supérieure sont disposées coaxialement par rapport à l'axe central longitudinal (39) de la colonne à sorption.

3. Colonne à sorption selon l'une des revendications précédentes, caractérisée en ce que chaque récipient (2, 3) présente, sur son bord inférieur et sur son bord supérieur, une bordure (21, 31, resp. 25, 33), la bordure (21, 31) située sur le bord inférieur saisissant chaque fois par le dessus la bordure (25, 33) située sur le bord (13, 25, 33) supérieur voisin.

4. Colonne à sorption selon l'une des revendications précédentes, caractérisée en ce que les soupapes (15, 27, resp. 17, 29) montées dans le fond (14, 26) et le couvercle (16, 28) de chaque récipient (2, 3) présentent une cage de soupape (40, 41), insérée de façon étanche au gaz, dans le fond du récipient (14, 26), resp. le couvercle du récipient (16, 28), cage de soupape dans laquelle un corps de soupape (44, 45) en forme de douille est guidé en translation en direction longitudinale du récipient, corps de soupape qui est, dans la position de fermeture, sollicité élastiquement pour s'écarter de l'intérieur du récipient (2, 3) afférent, fermé sur son extrémité tournée vers l'intérieur du récipient (2, 3) afférent et est pourvu, sur sa périphérie, d'au moins une ouverture de passage de gaz (52, 53), l'ouverture de passage de gaz (52, 53) étant fermée dans la position de fermeture par la cage de soupape (40, 41) et, dans le cas où les récipients (2, 3) sont empilés les uns sur les autres, il est prévu qu'un tube (54) pénètre dans les extrémités ouvertes, tournées les unes vers les autres, des corps de soupape (44, 45) des deux récipients et prenne appui sur les corps de soupape (44, 45), afin de presser les corps de soupape (44, 45) dans la position d'ouverture.

5. Colonne à sorption selon la revendication 4, caractérisée en ce que la cage de soupape (40, 41) présente un anneau intérieur (42, 43) qui ferme l'ouverture de passage de gaz (52, 53), dans la position de fermeture.

6. Colonne à sorption selon la revendication 4 ou 5, caractérisée en ce qu'un anneau intérieur (55, 56), sur lequel le tube (54) prend appui par ses extrémités, est prévu dans le corps de soupape (44, 45).

7. Colonne à sorption selon l'une des revendications 4 à 6, caractérisée en ce que le ressort, qui sollicite le corps de soupape (44, 45) dans la position de fermeture, est un ressort de pression (57, 58), prenant appui, d'une part, sur l'anneau intérieur de la cage de soupape (42, 43) et, d'autre part, sur un anneau extérieur (59, 60) du corps de soupape (44, 45).

8. Colonne à sorption selon l'une des revendications 4 à 7, caractérisée en ce qu'un joint d'étanchéité (48, 49) disposé entre le corps de soupape (44, 45) et la cage de soupape (40, 41), est monté dans l'anneau intérieur (42, 43) de la cage de soupape (40, 41).

9. Colonne à sorption selon l'une des revendications 4 à 8, caractérisée en ce qu'un joint d'étanchéité (63 à 66), disposé entre le tube (54) et le corps de soupape (44, 45), est monté sur la périphérie du tube.

10. Colonne à sorption selon l'une des revendications 4 à 9, caractérisée en ce qu'un anneau racleur (71, 72), qui agit sur la périphérie extérieure du corps de soupape (44, 45), est disposé sur l'extrémité, tournée vers le récipient afférent, de la cage de soupape (40, 41).

11. Colonne à sorption selon l'une des revendications précédentes, caractérisée en ce que la partie de raccordement de gaz supérieure et/ou inférieure est constituée par une partie d'accouplement (80), qui présente un boîtier (81), dans lequel est guidé déplaçable en translation un corps (83) en forme de douille, dont une extrémité pénètre dans l'extrémité ouverte du corps (44) de la soupape (17) montée dans le couvercle (28) du récipient, respectivement du récipient (3) le plus haut, ou respectivement dans le fond (14) du récipient, respectivement le récipient (3) le plus bas et est obturable par un corps de soupape (87) qui, dans la position d'ouverture de la soupape (17), montée dans le couvercle (28), resp. le fond (14), repose sur le fond (50) du corps (44) de la soupape (17) montée dans le couvercle (28), resp. le fond (14) avec libération de la au moins une ouverture (52) ménagée dans le corps de soupape (44), l'autre extrémité du corps (83) en forme de douille étant fermé au moyen d'une paroi (92), une tubulure à gaz (99) débouchant à l'intérieur du corps (83) en forme de douille entre une de ses extrémités et la paroi (92).

12. Colonne à sorption selon la revendication 11, caractérisée en ce que, afin d'actionner le corps de soupape (87), il est prévu dans la partie d'accouplement (80) un piston (89), pouvant recevoir un fluide sous pression et disposé déplaçable en translation dans le corps (83) en forme de douille sur la face de la paroi (92), opposée au corps de soupape (87), le piston (89) étant relié au corps de soupape (87), au moyen d'une tige de piston (90), traversant la paroi (92) de façon étanche aux gaz.

13. Colonne à sorption selon la revendication 12, caractérisée en ce que le corps (83) en forme de douille et le piston (89), sont réalisés de manière à pouvoir être bloqués dans le couvercle (28), ou le fond (14) du récipient (3, 2), lorsque la soupape (17) est dans la position d'ouverture.
